# EUROPEAN PATENT APPLICATION

(11) **EP 4 108 421 A1**
(43) Date of publication of application: **28.12.2022**
(21) Application number: 22180192.1
(22) Date of filing: 21.06.2022
(51) Int. Cl.: B29C 64/165, B29C 64/218, B29C 64/393, B22F 10/14, B22F 10/85, B22F 12/63, B33Y 10/00, B33Y 30/00, B33Y 50/02

(54) **FABRICATION APPARATUS, FABRICATION METHOD, AND CARRIER MEDIUM**

(30) Priority: 22.06.2021 JP 2021102826
(71) Applicant: Ricoh Company, Ltd., Tokyo 143-8555 (JP)
(72) Inventor: YAMASHITA, Yasuyuki, Ohta-ku, Tokyo, 143-8555 (JP); AMAN, Yasutomo, Ohta-ku, Tokyo, 143-8555 (JP); KAI, Tomoki, Ohta-ku, Tokyo, 143-8555 (JP)
(74) Representative: SSM Sandmair

(57) **Abstract**

A fabrication apparatus includes a loading unit (22) including a stage (24) onto which powder (20) is supplied, a rotator (12) that rotates while moving to flatten the powder (20) on the stage (24) to form a powder layer, a solidification device (52) that applies a fabrication liquid (10) to the powder layer on the stage (24) to solidify the powder layer to form a fabrication layer (30), and circuitry. The powder layer includes a first powder layer and a second powder layer. The circuitry causes the rotator (12) to move and rotate to form the first powder layer having a cyclic uneven surface and form the second powder layer on the first powder layer. The second powder layer has an uneven surface that is in phase with the cyclic uneven surface.

## Description

### BACKGROUND

### Technical Field

Embodiments of the present disclosure relate to a fabrication apparatus, a fabrication method, and a carrier medium carrying computer readable code for carrying out the fabrication method.

### Related Art

A three-dimensional fabrication apparatus includes a powder layer forming unit that forms a powder layer and a liquid discharge unit that discharges a fabrication liquid to the powder layer. Japanese Unexamined Patent Application Publication No. 2018-012282 describes a three-dimensional fabrication apparatus in which the powder layer forming unit includes a recess forming unit that forms a recess on a surface of the powder layer. The liquid discharge unit discharges the fabrication liquid to the powder layer having the recess formed by the recess forming unit.

Japanese Unexamined Patent Application Publication No. 2019-093682 describes a three-dimensional fabrication apparatus that cures a fabrication material in a layer to forms a layered fabrication object and sequentially stacks multiple layered fabrication objects one on another to form a three-dimensional object. The three-dimensional fabrication apparatus includes a fabrication stage on which the layered fabrication objects are stacked, an applying unit that applies a fabrication material onto the fabrication stage, a rotating member that flattens a surface of the fabrication material on the fabrication stage, and a control unit. The rotating member is movable relative to the fabrication stage, and the control unit controls a phase of rotation of the rotating member in a moving direction of the rotating member.

However, the three-dimensional fabrication apparatuses described above does not fabricate a three-dimensional object with high quality.

### SUMMARY

An object of the present disclosure is to prevent a fabrication liquid from excessively and insufficiently permeating into a powder layer to obtain a high-quality fabrication layer.

Embodiments of the present disclosure describe an improved fabrication apparatus that includes a loading unit including a stage onto which powder is supplied, a rotator that rotates while moving to flatten the powder on the stage to form a powder layer, a solidification device that applies a fabrication liquid to the powder layer on the stage to solidify the powder layer to form a fabrication layer, and circuitry. The powder layer includes a first powder layer and a second powder layer. The circuitry causes the rotator to move and rotate to form the first powder layer having a cyclic uneven surface and form the second powder layer on the first powder layer. The second powder layer has an uneven surface that is in phase with the cyclic uneven surface.

According to other embodiments of the present disclosure, there are provided a fabrication method and a carrier medium carrying computer readable code for controlling a computer system to carry out the fabrication method. The fabrication method includes supplying powder onto a stage of a loading unit, rotating and moving a rotator to flatten the powder on the stage to form a powder layer including a first powder layer and a second powder layer, applying a fabrication liquid to the powder layer on the stage to solidify the powder layer to form a fabrication layer, forming the first powder layer having a cyclic uneven surface, and forming the second powder layer on the first powder layer, the second powder layer having an uneven surface that is in phase with the cyclic uneven surface.

As a result, according to the present disclosure, a fabrication liquid is prevented from excessively and insufficiently permeating into a powder layer to obtain a high-quality fabrication layer.

### BRIEF DESCRIPTION OF THE SEVERAL VIEWS OF THE DRAWINGS

A more complete appreciation of the disclosure and many of the attendant advantages and features thereof can be readily obtained and understood from the following detailed description with reference to the accompanying drawings, wherein:
FIG. 1 is a schematic plan view of a three-dimensional fabrication apparatus according to an embodiment of the present disclosure;
FIG. 2 is a schematic side view of the three-dimensional fabrication apparatus according to the present embodiment;
FIG. 3 is a cross-sectional view of a fabrication section included in the three-dimensional fabrication apparatus according to the present embodiment;
FIG. 4 is a perspective view illustrating a part of the three-dimensional fabrication apparatus according to the present embodiment;
FIG. 5 is a perspective view of the fabrication section included in the three-dimensional fabrication apparatus according to the present embodiment;
FIG. 6 is a block diagram of the three-dimensional fabrication apparatus according to the present embodiment;
FIGS. 7A to 7E are schematic views illustrating operations of fabricating a three-dimensional object in the three-dimensional fabrication apparatus according to the present embodiment;
FIGS. 8A to 8D are schematic views illustrating a flattening operation in the three-dimensional fabrication apparatus according to the present embodiment;
FIG. 9 is a graph illustrating an uneven surface of a powder layer according to the present embodiment;
FIG. 10 is a schematic view of the fabrication section for explaining a phase of rotation of a flattening roller in the fabrication section according to the present embodiment; and
FIG. 11 is a schematic view of the fabrication section according to a variation of the present embodiment.

The accompanying drawings are intended to depict embodiments of the present invention and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

A three-dimensional fabrication apparatus uses, for example, additive manufacturing to fabricate a three-dimensional object. Hereinafter, a three-dimensional fabrication apparatus according to an embodiment of the present disclosure is described. The three-dimensional object includes a solidified body, a sintered body, a sacrificial molded body, a fabricated body, a green body, and the like described below.

### Configuration of Three-dimensional Fabrication Apparatus

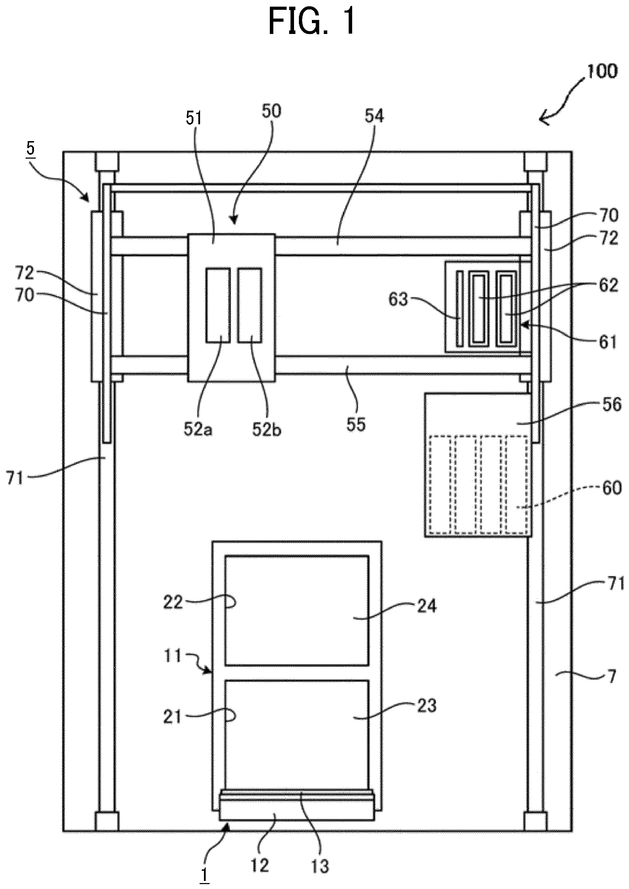

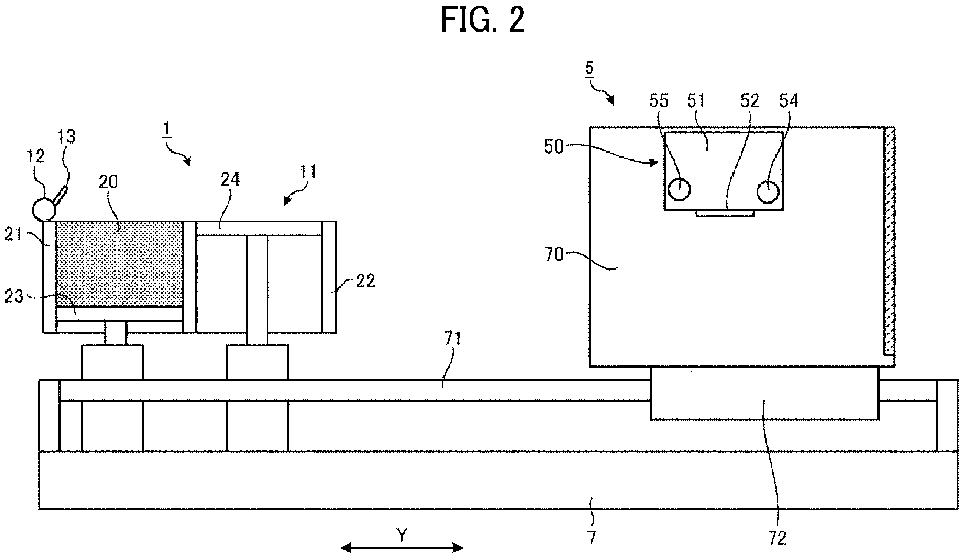

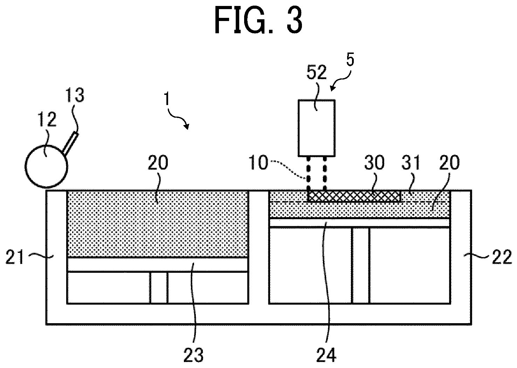

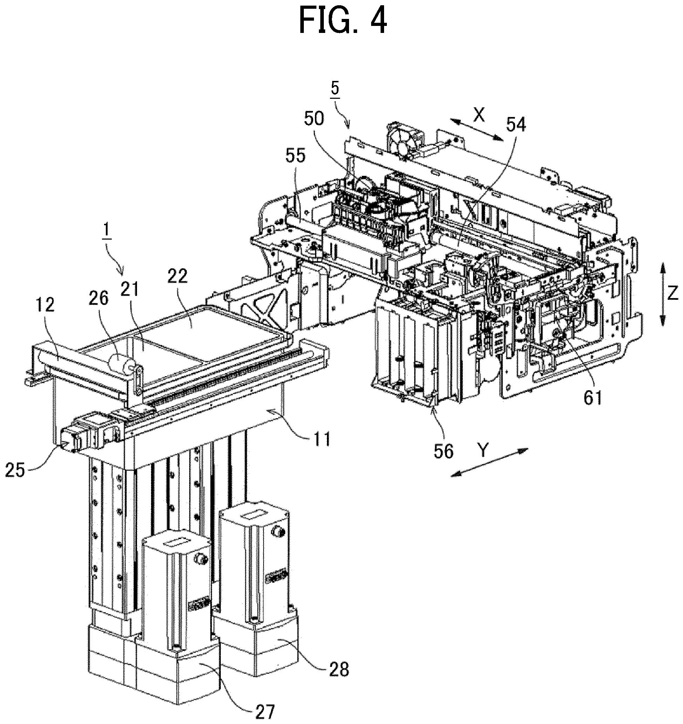

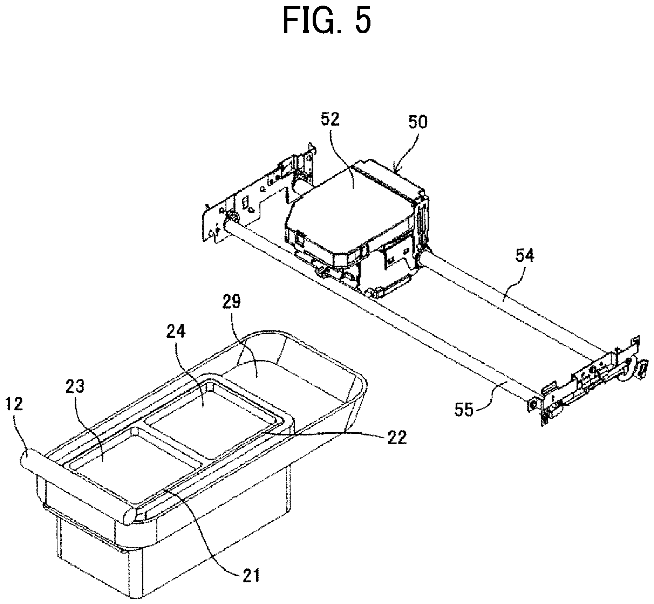

FIG. 1 is a schematic plan view of a three-dimensional fabrication apparatus 100 according to an embodiment of the present disclosure. FIG. 2 is a schematic side view of the three-dimensional fabrication apparatus 100 according to the present embodiment. FIG. 3 is a cross-sectional view of a fabrication section 1 included in the three-dimensional fabrication apparatus 100 according to the present embodiment. Note that FIG. 3 illustrates the fabrication section 1 in which a three-dimensional object is being fabricated. FIG. 4 is a perspective view illustrating a part of the three-dimensional fabrication apparatus 100 according to the present embodiment. FIG. 5 is a perspective view of the fabrication section 1 included in the three-dimensional fabrication apparatus 100 according to the present embodiment.

The three-dimensional fabrication apparatus 100 is an example of a fabrication apparatus according to the present embodiment and includes the fabrication section 1 in which a fabrication layer 30 (see FIG. 3) is formed. The fabrication layer 30 is a layered object formed of bonded powder such as coating powder. The three-dimensional fabrication apparatus 100 further includes a fabrication unit 5. The fabrication unit 5 discharges fabrication liquid 10 to a powder layer 31 spread in a layer in the fabrication section 1 to fabricate a three-dimensional object as illustrated in FIG. 3.

The fabrication section 1 includes a powder chamber 11 and a flattening roller 12. The flattening roller 12 is an example of a rotator serving as a flattening member (recoater). The flattening member may be, for example, a plate member (blade) instead of the rotator. The powder chamber 11 includes a supply chamber 21 to supply powder 20 and a fabrication chamber 22 in which fabrication layers 30 are laminated to fabricate a three-dimensional object. The fabrication chamber 22 is an example of a loading unit to which powder 20 is supplied.

A bottom portion of the supply chamber 21 acts as a supply stage 23 and is movable in a vertical direction (height direction). Similarly, a bottom portion of the fabrication chamber 22 acts as a fabrication stage 24 and is movable in the vertical direction (height direction). The fabrication layers 30 are laminated on the fabrication stage 24, so that a three-dimensional object including the fabrication layers 30 is fabricated on the fabrication stage 24. For example, a motor 27 moves the supply stage 23 upward and downward in a direction (height direction or Z direction) indicated by arrow Z in FIG. 4. Likewise, a motor 28 moves the fabrication stage 24 upward and downward in the Z direction.

The flattening roller 12 rotates while moving to supply powder 20 supplied onto the supply stage 23 of the supply chamber 21 to the fabrication chamber 22 and flatten the powder 20 in the fabrication chamber 22, thereby forming the powder layer 31. The flattening roller 12 is disposed extending in a direction (X direction) indicated by arrow X in FIG. 4, which is a direction along a stage surface (a surface on which the powder 20 is loaded) of the fabrication stage 24. A reciprocal moving assembly 25 reciprocally moves the flattening roller 12 relative to the stage surface of the supply stage 23 and the fabrication stage 24 in a direction (Y direction) indicated by arrow Y in FIG. 4. A motor 26 rotates the flattening roller 12 in a counter direction with respect to the moving direction of the flattening roller 12. Here, the counter direction means that the flattening roller 12 moves and rotates in a direction in which a portion of the flattening roller 12 facing the powder 20 moves in the same direction as a direction in which the flattening roller 12 moves to form the powder layer 31.

The fabrication unit 5 includes a liquid discharge unit 50 that selectively discharges any of multiple fabrication liquids 10 to a selected portion of the powder layer 31 on the fabrication stage 24 to form the fabrication layer 30. The liquid discharge unit 50 includes a carriage 51 and two liquid discharge heads 52a and 52b (hereinafter, simply referred to as "head(s) 52" unless distinguished) mounted on the carriage 51. In FIG. 1, the two heads 52 are illustrated. However, in other embodiments, the number of liquid discharge heads may be one, or three or more.

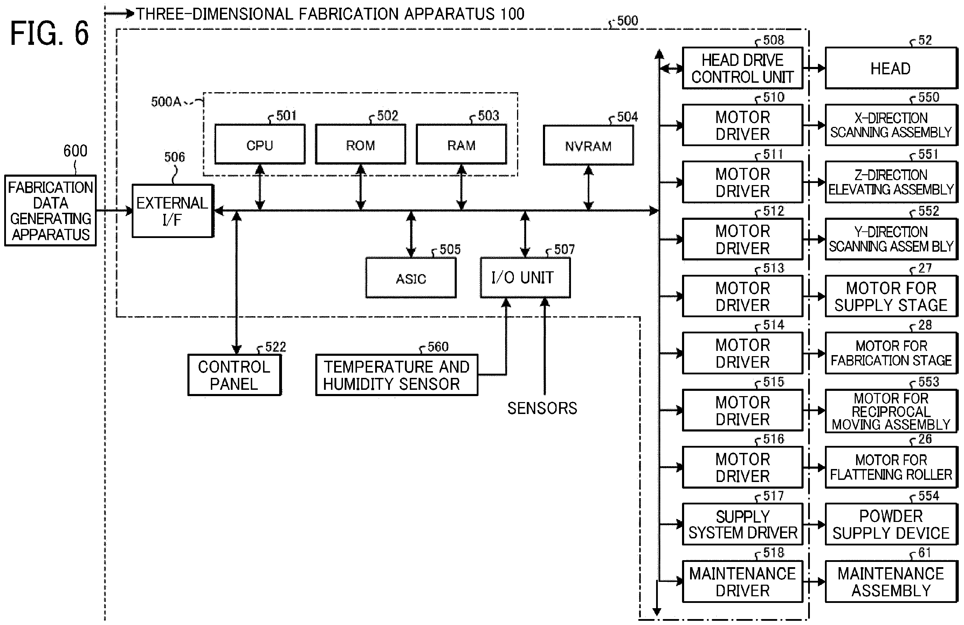

The carriage 51 is movably supported by guides 54 and 55. The guides 54 and 55 are held by side plates 70 on both sides so as to be movable up and down. An X-direction scanning assembly 550 (see FIG. 6) described later reciprocally moves the carriage 51 in the X direction. The X-direction scanning assembly 550 includes a motor, a pulley, and a belt. The X direction is the same as the main scanning direction.

Each of the two heads 52a and 52b includes two nozzle rows in each of which a plurality of nozzles is arranged to discharge liquid. Two nozzle rows of one head 52a discharge, for example, fabrication liquid A and fabrication liquid B. Two nozzle rows of the other head 52b discharge, for example, fabrication liquid C and fabrication liquid D. Note that the configuration of the head 52 is not limited to the above-described configuration.

The composition of the fabrication liquid is not limited, and the fabrication liquids A, B, C, and D may be the same or may be a combination of liquids including different crosslinkers (crosslinker-containing liquids). A plurality of tanks 60 is mounted on a tank mount 56 and stores the fabrication liquid A, the fabrication liquid B, the fabrication liquid C, and the fabrication liquid D, respectively. The fabrication liquids A, B, C, and D are supplied to the heads 52a and 52b via supply tubes. The carriage 51 integrally includes a post powder supply unit that supplies powder 20 to at least a portion to which fabrication liquid 10 has adhered when one fabrication layer 30 is formed in the fabrication chamber 22.

Further, a maintenance assembly 61 for maintaining and recovering the heads 52 of the liquid discharge unit 50 is disposed on one side (right side in FIG. 1) in the X direction. The maintenance assembly 61 includes caps 62 and a wiper 63. The caps 62 are brought into close contact with the nozzle surface (a surface on which the nozzles are arranged) of the head 52, and suck fabrication liquid 10 from the nozzles to discharge high-viscosity fabrication liquid 10 and powder 20 blocking the nozzles. Then, the wiper 63 wipes the nozzle surface to form meniscus of fabrication liquid 10 in the nozzles, in which the pressure is negative. When the fabrication liquid 10 is not discharged, the maintenance assembly 61 covers the nozzle surfaces of the heads 52 with the caps 62 to prevent powder 20 from entering the nozzles and to prevent the fabrication liquid 10 from drying.

The fabrication unit 5 includes a slider 72 slidably supported by a guide 71 disposed above a base 7. The entire fabrication unit 5 is reciprocally movable in the Y direction (sub-scanning direction) perpendicular to the X direction. A Y-direction scanning assembly 552 (see FIG. 6) described later reciprocally moves the entire fabrication unit 5 in the Y direction. The liquid discharge unit 50 is movable upward and downward in the Z direction together with the guides 54 and 55. A Z-direction elevating assembly 551 (see FIG. 6) described later raises and lowers the liquid discharge unit 50 in the Z direction.

### Detailed Configuration of Fabrication Section

The powder chamber 11 has a box shape and includes two open-topped chambers, the supply chamber 21 and the fabrication chamber 22. The supply stage 23 is vertically movable inside the supply chamber 21, and the fabrication stage 24 is vertically movable inside the fabrication chamber 22. The relation between a powder amount a1 supplied from the supply chamber 21 and a volume (powder amount a2) of the fabrication chamber 22 satisfies an expression "a1 > 1.01 × a2." Side faces of the supply stage 23 contact inner side faces of the supply chamber 21. Side faces of the fabrication stage 24 contact inner side faces of the fabrication chamber 22. The upper surfaces of the supply stage 23 and the fabrication stage 24 are kept horizontal.

As illustrated in FIG. 5, a surplus powder chamber 29 is disposed adjacent to the fabrication chamber 22 and around the supply chamber 21 and the fabrication chamber 22. The surplus powder chamber 29 has a recessed shape which is open-topped. The surplus powder chamber 29 receives surplus powder 20 fallen from the fabrication chamber 22 among the powder 20 supplied by the flattening roller 12 when the powder layer 31 is being formed in the fabrication chamber 22. The surplus powder 20 fallen into the surplus powder chamber 29 is returned to a powder supply device 554 (see FIG. 6), which is described later, to supply the powder 20 to the supply chamber 21.

The powder supply device 554 is disposed above the supply chamber 21. The powder supply device 554 supplies powder 20 in a tank of the powder supply device 554 to the supply chamber 21 at the time of an initial operation of a fabrication process or when an amount of the powder 20 in the supply chamber 21 decreases. Examples of a method of a powder conveyance for supplying the powder 20 include a screw conveyor system using a screw and an air conveyance system using air.

The flattening roller 12 transfers and supplies powder 20 from the supply chamber 21 to the fabrication chamber 22 and smooths and flattens the surface of the powder 20 to form the powder layer 31 which is a layered powder having a desired thickness. The flattening roller 12 has a rod shape longer than an inside dimension of the fabrication chamber 22 and the supply chamber 21 (that is, a width of a portion to which the powder 20 is supplied or stored). The reciprocal moving assembly 25 reciprocally moves the flattening roller 12 in the Y direction (sub-scanning direction) along the stage surface.

The flattening roller 12 horizontally moves to pass through an area above the supply chamber 21 and the fabrication chamber 22 from an outside of the supply chamber 21 while being rotated by the motor 26. Accordingly, the powder 20 is transferred and supplied into the fabrication chamber 22, and the flattening roller 12 flattens the powder 20 while passing over the fabrication chamber 22, thus forming the powder layer 31.

Further, as illustrated in FIG. 2, a powder removal plate 13 contacts the circumferential surface of the flattening roller 12 to remove powder 20 adhering to the flattening roller 12. The powder removal plate 13 moves together with the flattening roller 12 while contacting the circumferential surface of the flattening roller 12, thereby removing the powder 20 adhering to the flattening roller 12. The powder removal plate 13 contacts the flattening roller 12 against the rotation direction of the flattening roller 12 which is flattening the powder 20.

In the present embodiment, the powder chamber 11 of the fabrication section 1 includes two chambers of the supply chamber 21 and the fabrication chamber 22. Alternatively, the powder chamber 11 may include only the fabrication chamber 22, and powder 20 may be supplied from a powder supply device to the fabrication chamber 22 and flattened by the flattening member.

### Electrical Configuration of Three-dimensional Fabrication Apparatus

FIG. 6 is a block diagram of the three-dimensional fabrication apparatus 100 according to the present embodiment. As illustrated in FIG. 6, a controller 500 includes a main controller 500A including a central processing unit (CPU) 501, a read only memory (ROM) 502, and a random access memory (RAM) 503. The CPU 501 controls the entire system of the three-dimensional fabrication apparatus 100. The ROM 502 stores programs, which include a program to cause the CPU 501 to perform the control of fabricating a three-dimensional object, and other fixed data. The RAM 503 temporarily stores fabrication data and the like.

The controller 500 further includes a nonvolatile RAM (NVRAM) 504 that retains data while the apparatus is powered off. The controller 500 further includes an application specific integrated circuit (ASIC) 505 to perform image processing in which various signals are processed on image data and processing of input and output signals for controlling the entire apparatus.

The controller 500 further includes an external interface (I/F) 506 to send and receive data and signals when the controller 500 receives fabrication data from a fabrication data generating apparatus 600 (an external device). The fabrication data generating apparatus 600 generates fabrication data in which a final-form object (three-dimensional object) is sliced in multiple fabrication layers. A data processor such as a personal computer is used as the fabrication data generating apparatus 600.

The controller 500 further includes an input-output (I/O) unit 507 to receive detection signals of various sensors. The controller 500 further includes a head drive control unit 508 to control driving of the head 52 of the liquid discharge unit 50. The controller 500 further includes a motor driver 510 that drives a motor included in the X-direction scanning assembly 550 and a motor driver 512 that drives a motor included in the Y-direction scanning assembly 552. The X-direction scanning assembly 550 moves the carriage 51 of the liquid discharge unit 50 in the X direction (main scanning direction). The Y-direction scanning assembly 552 moves the fabrication unit 5 in the Y direction (sub-scanning direction).

The controller 500 further includes a motor driver 511 that drives a motor included in the Z-direction elevating assembly 551. The Z-direction elevating assembly 551 moves (raises and lowers) the carriage 51 of the liquid discharge unit 50 in the Z direction. The Z-direction elevating assembly 551 may move (raises and lowers) the entire fabrication unit 5 in the Z-direction.

The controller 500 further includes a motor driver 513 that drives the motor 27 for raising and lowering the supply stage 23 and a motor driver 514 that drives the motor 28 for raising and lowering the fabrication stage 24. The controller 500 further includes a motor driver 515 that drives a motor 553 of the reciprocal moving assembly 25 for moving the flattening roller 12 and a motor driver 516 that drives the motor 26 for rotating the flattening roller 12.

The controller 500 further includes a supply system driver 517 that drives the powder supply device 554 to supply powder 20 to the supply chamber 21 and a maintenance driver 518 that drives the maintenance assembly 61 of the liquid discharge unit 50. A temperature and humidity sensor 560 detects the temperature and the humidity as the environment condition of the apparatus. The detected signals of the temperature and humidity sensor 560 and detected signals of other sensors are input into the I/O unit 507 of the controller 500. The controller 500 is connected to a control panel 522 to input and display data necessary for the apparatus.

The fabrication data generating apparatus 600 and the three-dimensional fabrication apparatus (powder additive manufacturing apparatus) 100 construct a three-dimensional fabrication system.

### Operation of Fabricating Three-dimensional Object

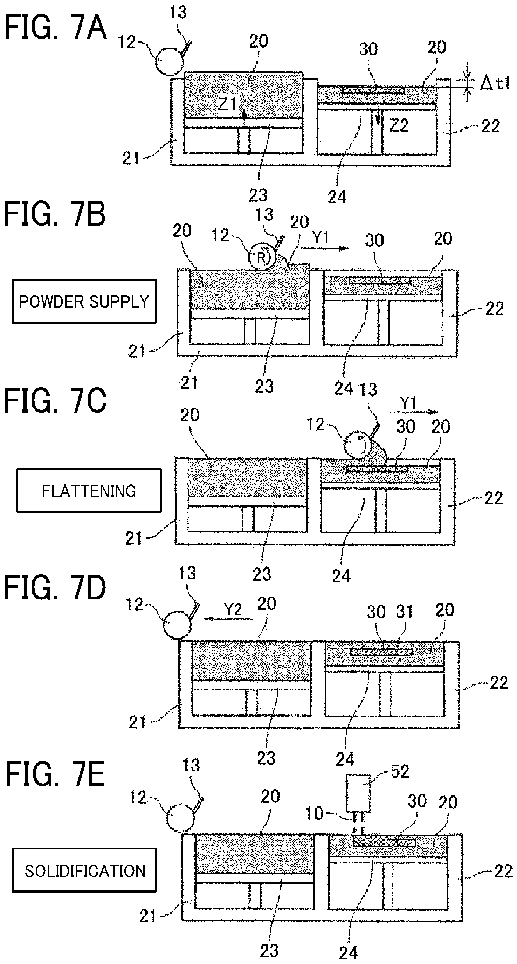

FIGS. 7A to 7E are schematic views illustrating operations of fabricating a three-dimensional object in the three-dimensional fabrication apparatus 100 according to the present embodiment. FIGS. 7A to 7E also illustrate an example of a fabrication process according to the present embodiment. FIG. 7A illustrates the fabrication section 1 in which a first fabrication layer 30 has been formed on the fabrication stage 24 of the fabrication chamber 22. When a second fabrication layer 30 is formed on the first fabrication layer 30, as illustrated in FIG. 7A, the supply stage 23 of the supply chamber 21 is raised in the direction indicated by arrow Z1, and the fabrication stage 24 of the fabrication chamber 22 is lowered in the direction indicated by arrow Z2.

At this time, a lowering distance of the fabrication stage 24 is set so that a distance between an upper surface of the fabrication chamber 22 (surface of powder 20) and a lower end of the flattening roller 12 (lower tangential portion) becomes Δt1. The distance Δt1 corresponds to the thickness of the powder layer 31 to be subsequently formed. As an example, the distance Δt1 is about several tens µm to about 100 µm.

Next, as illustrated in FIG. 7B, the flattening roller 12 transfers powder 20 upper than the level of an upper surface of the supply chamber 21 in the direction indicated by arrow Y1 toward the fabrication chamber 22 while rotating in the counter direction indicated by arrow R (counterclockwise CCW in FIG. 7B). Thus, the powder 20 is transferred and supplied into the fabrication chamber 22 (powder supply step).

Next, as illustrated in FIG. 7C, the flattening roller 12 moves in parallel to the stage surface of the fabrication stage 24 of the fabrication chamber 22 (flattening step). As a result, a powder layer 31 having a predetermined distance (thickness) Δt1 is formed over the fabrication layer 30 on the fabrication stage 24 as illustrated in FIG. 7D. The controller 500 causes the flattening roller 12 to move and rotate in a direction in which the portion of the flattening roller 12 facing the powder 20 moves in the same direction as the direction in which the flattening roller 12 moves to form the powder layer 31 (i.e., the counter direction). After the powder layer 31 is formed, the flattening roller 12 moves in the direction indicated by arrow Y2 and returns to the initial position as illustrated in FIG. 7D.

The flattening roller 12 is movable while maintaining a constant distance from the level of the upper surface of the fabrication chamber 22 and the supply chamber 21. Such a configuration can form the powder layer 31 having a uniform thickness Δt1 on the fabrication stage 24 of the fabrication chamber 22 or on the fabrication layer 30 already formed on the fabrication stage 24 while transferring the powder 20 to an area on the fabrication chamber 22 with the flattening roller 12.

Then, as illustrated in FIG. 7E, the head 52 of the liquid discharge unit 50 discharges and applies droplets of the fabrication liquid 10 to the powder layer 31 to form and laminate the next fabrication layer 30 in the powder layer 31 (solidification step). For example, as the fabrication liquid 10 discharged from the head 52 is mixed with the powder 20, adhesives contained in the powder 20 are dissolved, and the dissolved adhesives are bonded together to bind the powder 20, thereby forming the fabrication layer 30.

Subsequently, the step of forming the powder layer 31 by the above-described powder supply and flattening steps and the step of discharging the fabrication liquid 10 with the head 52 are performed again to form a new fabrication layer 30. At this time, the newly-formed upper fabrication layer 30 and the preceding lower fabrication layer 30 are united to form a part of a three-dimensional fabrication object.

Thereafter, the step of forming the powder layer 31 by the powder supply and flattening steps and the step of discharging the fabrication liquid 10 with the head 52 are repeated a desired number of times to complete the three-dimensional object. That is, the fabrication liquid 10 is applied to each layer of the powder 20 spread in a layer (each powder layer 31), and a portion of the powder 20 to which the fabrication liquid 10 is applied is cured (solidified) to form the fabrication layer 30. The fabrication layers 30 thus formed are sequentially laminated to form a three-dimensional object. The head 52 is an example of a solidification device that applies the fabrication liquid 10 to the powder layer 31 on the fabrication stage 24 of the fabrication chamber 22 to solidify the powder layer 31 to form fabrication layer 30.

### Powder Material for Three-dimensional Fabrication

Next, examples of a powder material for fabricating the three-dimensional object and fabrication liquid used in the three-dimensional fabrication apparatus 100 are described. The powder material and the fabrication liquid are not limited to the examples described below.

The powder material for the three-dimensional fabrication includes a base material and a soluble organic material. The base material is coated with the soluble organic material having the average thickness of 5 to 1000 nm. The soluble organic material is dissolved and becomes cross-linkable by the effect of the crosslinker-containing liquid serving as fabrication liquid. Accordingly, when the crosslinker-containing liquid is applied to the soluble organic material, the soluble organic material is dissolved and cross-linked by the effect of the cross-linker contained in the crosslinker-containing liquid.

Thus, as a thin layer (powder layer 31) is formed of the above-described powder material for the three-dimensional fabrication and the crosslinker-containing liquid as the fabrication liquid 10 is discharged onto the powder layer 31, the dissolved soluble organic material is cross-linked in the powder layer 31, and the powder layer 31 is bonded and cured, thereby forming the fabrication layer 30. At this time, the base material is coated with the soluble organic material having the average thickness of 5 to 1000 nm. Therefore, when the soluble organic material is dissolved, the minimum amount of the soluble organic material required for the three-dimensional fabrication is present around the base material, and the soluble organic material is cross-linked to form a three-dimensional network. As a result, the powder layer 31 is cured with high dimensional accuracy and good strength. By repeating the above-described steps, a complicated three-dimensional object can be formed simply and efficiently with high dimensional accuracy without being out of shape before sintering or the like.

The soluble organic material may be present in powder 20, and the fabrication liquid 10 is applied to the powder 20 to cross-link the soluble organic material, thereby forming a three-dimensional object. The soluble organic material may be mixed with the base material instead of coating the base material with the soluble organic material. In another embodiment, powder 20 may include only the base material, and the fabrication liquid 10 containing the soluble organic material may be applied to the powder 20, thereby forming a three-dimensional object.

### Base Material

The base material is not particularly limited as long as the base material has a form of powder or particles, and can be suitably selected to suit to a particular application. Examples of the base material include metals, ceramics, carbon, polymers, and the like. From the viewpoint of obtaining a three-dimensional object having high strength, metals and ceramics that can be finally sintered are preferable.

The metal is not particularly limited as long as the material contains a metal. Examples of the metal includes a sinter-resistant material such as aluminum (Al), titanium (Ti), copper (Cu), and further includes magnesium (Mg), and vanadium (V), chromium (Cr), manganese (Mn), iron (Fe), cobalt (Co), nickel (Ni), zinc (Zn), yttrium (Y), zirconium (Zr), niobium (Nb), molybdenum (Mo), lead (Pb), silver (Ag), indium (In), tin (Sn), tantalum (Ta), tungsten (W), neodymium (Nd), and alloys of the metals described above. Among these metals, steel use stainless (SUS), iron (Fe), copper (Cu), silver (Ag), titanium (Ti), aluminum (Al), and alloys thereof are preferable. The sinter-resistant material such as aluminum (Al), titanium (Ti), and copper (Cu), and alloys thereof are more preferable. Examples of the aluminum alloy include AlSi10Mg, AlSi12, AlSi7Mg0.6, AlSi3Mg, AlSi9Cu3, SCALMALLOY, and ADC12. Each of these materials can be used alone or in combination with others.

Examples of the ceramics include oxides, carbides, nitrides, hydroxides, and the like. Examples of the oxides include, but are not limited to, metal oxides. Examples of the metal oxides include silica (SiO₂), alumina (Al₂O₃), zirconia (ZrO₂), titania (TiO₂), and the like. However, the above-described materials are only examples, and the present disclosure is not limited to the examples described above. Each of these materials can be used alone or in combination with others. Examples of the carbon include graphite, graphene, carbon nanotubes, carbon nanohorns, and fullerene. Each of these materials can be used alone or in combination with others.

In addition, the surface of the base material may be modified by a certain surface treatment to improve the affinity for the soluble organic material. A commercially available product can be used for the base material. Examples of the commercially available product include pure Al (e.g., A1070-30BB available from Toyo Aluminum K.K.), pure Ti (available from OSAKA Titanium technologies Co., Ltd.), SUS316L (e.g., trade name: PSS316L available from Sanyo Special Steel Co., Ltd.), AlSilOMg (e.g., Si10Mg30BB available from Toyo Aluminum K.K.), SiO₂ (e.g., trade name: EXCELICA SE-15K available from Tokuyama Corporation), Al₂O₃ (e.g., trade name: TAIMICRON TM-5D available from TAIMEI CHEMICALS CO., LTD.), ZrO₂ (e.g., trade name: TZ-B53 available from Tosoh Corporation), and the like.

The base material may be subjected to a surface treatment (surface modification treatment) to improve adhesion to a resin and to improve coating properties. The volume average particle diameter of the base material is not particularly limited and can be suitably selected to suit to a particular application, but is preferably from 2 to 80 µm, more preferably from 8 to 50 µm.

The volume average particle diameter of the base material of 2 µm or more can prevent an increase of an influence of aggregation and facilitate resin coating on the base material. Thus, the base material having the volume average particle diameter of 2 µm or more can prevent a reduction in yield, a reduction in production efficiency of the fabrication product, and deterioration of handleability of the base material. Further, when a thin layer is formed of a powder material for the three-dimensional fabrication, the volume average particle diameter of the base material of 80 µm or less can increase the filling factor of the powder material for three-dimensional fabrication in the thin layer. Accordingly, the three-dimensional object thus fabricated is less likely to have void areas.

A particle size distribution of the base material is not particularly limited and may be suitably selected to suit to a particular application. However, a shaper particle size distribution is preferable. The outer shape, surface area, circularity, fluidity, and wettability of the base material can be suitably selected to suit to a particular application.

The base material can be produced by a conventionally known method. As a method for producing a powder-shaped or particle-shaped base material, for example, there are pulverization in which a solid is fragmented by applying compression, impact, friction or the like, atomization in which a melted base material is sprayed and rapidly cooled to obtain a quenched powder, precipitation in which a component dissolved in a liquid is precipitate, and a gas-phase reaction in which the base material is vaporized and crystalized, and the like.

The base material is not limited by the production method, but the atomization is preferable because a spherical shape can be obtained and a variation in particle diameter is small. Examples of the atomization include water atomization, gas atomization, centrifugal atomization, plasma atomization, and the like, and any one of the methods described above is suitably used.

### Soluble Organic Material

As the soluble organic material, a material having properties of being dissolved in fabrication liquid and being cross-linkable by the effect of the cross-linker can be used. In other words, the soluble organic material is not particularly limited and may be suitably selected to suit to a particular application as long as the soluble organic material is soluble in the fabrication liquid and cross-linkable by the cross-linker. A resin as the soluble organic material is described below.

Any resin can be used as long as the resin has a reactive functional group, is soluble in liquid for forming a cured product (i.e., a curing liquid), and can react with a cross-linker contained in the curing liquid to form a cross-linked structure by a covalent bond. The resin having a solubility means that, for example, 90% by mass or more of the resin is dissolved in the solvent when 1 g of the resin is mixed with 100 g of the solvent included in the curing liquid at 30°C and is stirred.

Preferably, the resin has low reactivity with powder of a highly active metal as the base material, is soluble in an organic solvent before being cured, and is insoluble in the organic solvent after being cured (cross-linked). More preferably, the resin is soluble in an organic solvent having low solubility in water.

When the resin has low reactivity with powder of a highly active metal as the base material, is soluble in an organic solvent before the curing liquid is applied, and is insoluble in the organic solvent after the curing liquid is applied (after being cross-linked), the resin is adaptable for the soluble organic material even if the base material is a highly active metal, that is, a water-prohibited material (for example, aluminum, titanium, and the like), and the produced three-dimensional object can be prevented from collapsing even when immersed in a solution including an organic solvent.

The reactive functional group is not particularly limited as long as the reactive functional group can react with a cross-linker to form a covalent bond, and can be suitably selected to suit to a particular application. Examples of the reactive functional group include a hydroxyl group, a carboxyl group, an amide group, a phosphate group, a thiol group, an acetoacetyl group, an ether linkage, and the like.

Among these groups, the resin preferably has a hydroxyl group in terms of improving the adhesion to the base material and the reactivity with the cross-linker. Preferably, 95% by mass or more of the resin is pyrolyzed when the resin alone is heated at 450°C in order to prevent the resin from remaining in the three-dimensional object and causing sintering inhibition during sintering.

Examples of the resin include polyvinyl acetal (glass transition temperature (Tg): 107°C), polyvinyl butyral (Tg: 67°C), polyacrylic polyol (Tg: 80°C), polyester polyol (Tg: 133°C), polybutadiene polyol (Tg: -17°C), ethyl cellulose (Tg: 145°C), nitrocellulose (Tg: 50°C), and the like. Examples of the resin further include partially saponified products of vinyl acetate copolymer (e.g., vinyl chloride-vinyl acetate copolymer and ethylene-vinyl acetate copolymer), polyether polyol, and phenolic polyol. Each of these materials can be used alone or in combination with others.

Next, the resin that has not been crosslinked is described below. The resin is not particularly limited as long as the resin has a solubility in water of 0.5 (g/100 g of H₂O) or less, which means that the resin is dissolved in the range of 0.5 g or less in 100 g of water at 25°C Examples of the resin include acrylic, acrylic polyol, polyester, epoxy, polyol, urethane, polyether, polyvinyl butyral, polyvinyl acetal, polyvinyl chloride, vinyl acetate, paraffin, olefin, ethyl cellulose, and the like.

Further, the resin is not particularly limited as long as the resin is soluble in the organic solvent contained in ink. The resin may be a homopolymer or a heteropolymer (copolymer) and may be modified, or a known functional group may be introduced to the resin. Each of these materials can be used alone or in combination with others.

The weight average molecular weight of a non-aqueous resin is preferably 150,000 or less, more preferably 20,000 or more and 100,000 or less. The non-aqueous resin having the weight average molecular weight of 100,000 or less is preferably solid at room temperature.

A commercially available product can be used for the non-aqueous resin. Examples of the commercially available product include polyvinyl butyral (e.g., BM-5 available from SEKISUI CHEMICAL CO., LTD.), copolymer of vinyl acetate and vinyl chloride (e.g., SOLBIN A available from Nissin Chemical Industry Co., Ltd.), polyester polyol (e.g., SUNDHOMA formerly known as POLYLITE OD-X-668 available from DIC Corporation, ADEKA NEW ACE YG-108 available from ADEKA Corporation, and the like), polybutadiene polyol (e.g., GQ-1000 available from Nippon Soda Co., Ltd.), polyvinyl butyral and polyvinyl acetal (e.g., S-LEC BM-2 and KS-1 available from SEKISUI CHEMICAL CO., LTD., MOWITAL B20H available from Kuraray Co., Ltd., and the like), polyacrylic polyol (e.g., ACRYDIC WFU-580 available from DIC Corporation), and ethyl cellulose (e.g., ETHOCEL available from Nisshin Kasei Co., Ltd.).

### Crosslinker-containing Liquid

The crosslinker-containing liquid as fabrication liquid is not particularly limited as long as liquid includes a cross-linker in a liquid medium, and is suitably selected to suit to a particular application. The crosslinker-containing liquid may include other components appropriately selected as necessary in addition to the liquid medium and the cross-linker.

The other components can be appropriately selected in consideration of various conditions such as the type of a device for applying the crosslinker-containing liquid, frequency of use, and an amount of the crosslinker-containing liquid. For example, when the crosslinker-containing liquid is applied by a liquid discharge method, the crosslinker-containing liquid can be selected in consideration of the influence of clogging or the like of the nozzles of the head 52. The curing liquid as the crosslinker-containing liquid is described below.

### Curing Liquid

The curing liquid includes a curing agent bondable to the reactive functional group by a covalent bond, preferably includes a first organic solvent, and further includes other components as necessary.

### Curing Agent

The curing agent is bondable to the reactive functional group by a covalent bond. The curing agent forms a covalent bond with the reactive functional group of the resin to form a cross-linked structure, thereby enhancing the strength of the fabricated three-dimensional object and improving the solvent resistance of the fabricated three-dimensional object. In the present specification, the "curing agent" is synonymous with "cross-linker."

The curing agent is a compound including two or more isocyanate groups at the molecular ends. Examples of the compound including two or more isocyanate groups at the molecular ends include, but are not limited to, diisocyanate, polyisocyanate, and the like.

Examples of the diisocyanate include, but are not limited to: aromatic diisocyanate such as tolylene diisocyanate (TDI), diphenylmethane diisocyanate (MDI), tolidine diisocyanate (TODI), naphthalene diisocyanate (NDI), xylylene diisocyanate (XDI), and paraphenylene diisocyanate; aliphatic isocyanate such as isophorone diisocyanate (IPDI), 1,3-bis(isocyanatomethyl)cyclohexane (H6XDI), hexamethylene diisocyanate (HDI), and pentamethylene diisocyanate (PDI); other diisocyanates such as lysine diisocyanate (LDI) and tetramethylxylene diisocyanate (TMXDI); and adducts of the above-described diisocyanate with diol compound.

Examples of polyisocyanate include adducts of the above-described diisocyanate with triol, biuret, allophanate, and isocyanurate. The compound having two or more isocyanate groups at the molecular ends may be a commercially available product. Examples of the commercially available product include TAKENATE D110N, D120N, D140N, D160N, D165N, D178NL, D103H, and D204EA-1 and STABIO D370N and D376N available from Mitsui Chemicals, Inc., DURANATE D101, D201, and A201H available from Asahi Kasei Corporation, and the like. Each of the commercially available products can be used alone or in combination with others.

The content of the curing agent in the total amount of the curing liquid is not limited to any particular value and varied in accordance with the intended purpose. The proportion of the curing agent is preferably 1.0% by mass or more, more preferably 5.0% by mass or more, and still more preferably 5.0% by mass or more and 50% by mass or less. When the proportion of the curing agent to the total amount of the curing liquid is 1.0% by mass or more and 50% by mass or less, the curing liquid prevents the fabricated three-dimensional object from being understrength.

### First Organic Solvent

The first organic solvent is a liquid component that keeps the curing liquid in a liquid state at room temperature. The first organic solvent preferably has a saturated vapor pressure of 2,000 Pa or less at 25°C and is more preferably insoluble or slightly soluble in water. In this specification, being insoluble or slightly soluble in water means that the solubility in water is 80 g/L or less. The first organic solvent having the saturated vapor pressure of 2,000 Pa or less at 25°C prevents the nozzle from drying when the apparatus is not operating (on standby), thereby improving the discharge stability.

Further, the first organic solvent preferably can dissolve 1% by mass or more of the resin contained in the powder material for three-dimensional fabrication at 25°C, and more preferably can dissolve 5% by mass or more of the resin. Since the first organic solvent can dissolve 1% by mass or more of the resin contained in the powder material for three-dimensional fabrication at 25°C, the strength of the three-dimensional object before sintering can be improved.

Examples of the first organic solvent include aliphatic hydrocarbon or aromatic hydrocarbon such as n-octane (boiling point (bp): 125.6°C, saturated vapor pressure (Psat): 1. 86 kPa at 25°C), m-xylene (bp: 139°C, Psat: 0.8 kPa at 20°C), and solvent naphtha (bp: 150°C or higher, Psat: 0.1 kPa to 1.4 kPa at 20°C); ketone such as diisobutyl ketone (bp: 168°C, Psat: 0.23 kPa at 20°C), 3-heptanone (bp: 146°C to 149°C, Psat: 1.4 kPa at 25°C), 2-octanone (bp: 172.5°C, Psat: 1.35 kPa at 25°C), and acetylacetone (bp: 138°C, Psat: 0.93 kPa); ester such as butyl acetate (bp: 126°C, Psat: 1.53 kPa at 25°C), amyl acetate (bp: 142°C, Psat: 0.747 kPa at 25°C), n-hexyl acetate (bp: 168°C to 170°C, Psat: 0.5 kPa at 20°C), n-octyl acetate (bp: 210°C), ethyl butyrate (bp: 121°C, Psat: 0.17 kPa at 20°C), ethyl valerate (bp: 145°C), ethyl caprylate (bp: 208°C, Psat: 0.2 kPa at 20°C), ethyl octanoate (bp: 208°C, Psat: 0.003 kPa at 25°C), ethyl acetoacetate (bp: 181°C, Psat: 0.1 kPa at 20°C), ethyl 3-ethoxypropionate (bp: 166°C, Psat: 0.2 kPa at 25°C), diethyl oxalate (bp: 182°C to 186°C, Psat: 0.027 kPa at 20°C), diethyl malonate (bp: 199°C, Psat: 0.13 kPa at 40°C), diethyl succinate (bp: 215°C to 217°C, Psat: 0. 133 kPa at 55°C), diethyl adipate (bp: 245°C), bis(2-ethylhexyl) maleate (bp: 173°C), triacetin (bp: 258°C, Psat: 0.00033 kPa at 25°C), tributyrin (bp: 190°C), propylene glycol monomethyl ether acetate (bp: 146°C, Psat: 0.5 kPa), ethylene glycol monobutyl ether acetate (bp: 192°C, Psat: 0. 031 kPa at 25°C); ether such as dibutyl ether (bp: 142°C, Psat: 0. 64 kPa at 25°C), 1,2-dimethoxybenzene (bp: 206°C to 207°C, Psat: 0.063 kPa at 25°C), 1,4-dimethoxybenzene (bp: 213°C, Psat: less than 0.13 kPa at 25°C), and diethylene glycol monobutyl ether (butyl carbitol, bp: 230°C, Psat: 0. 0013 kPa). The first organic solvent is not particularly limited, and any compound not described above can also be suitably selected as the first organic solvent to suit to a particular application as long as the compound has the vapor pressure of 2,000 Pa or less at 25°C and can dissolve 1% by mass of the resin contained in the powder material for three-dimensional fabrication. Each of these organic solvents can be used alone or in combination with others.

The proportion of the first organic solvent to the total amount of the curing liquid is preferably from 30% to 90% by mass, more preferably from 50% to 80% by mass. When the proportion of the first organic solvent to the total amount of the curing liquid is from 30% to 90% by mass, the solubility of the resin can be improved, and the three-dimensional object can be strengthened. The fabrication liquid including the above-described curing liquid can prevent the nozzles from drying when the apparatus is not operating (on standby), thereby suppressing nozzle clogging and nozzle missing.

### Other Components

Examples of other components includes a drying inhibitor, a viscosity adjusting agent, a surfactant, a penetrant, a defoamer, a pH adjuster, an antiseptic, a fungicide, a colorant, a preservative, a stabilizer, and the like. These known materials can be added to the curing liquid without limitation.

### Preparation of Curing Liquid

Polyisocyanate made of hexamethylene diisocyanate (e.g., D160N available from Mitsui Chemicals, Inc.), which acts as the curing agent, is mixed with diethyl succinate (available from FUJIFILM Wako Pure Chemical Corporation), which acts as the first organic solvent so as to be 100 parts by mass all together. The proportion of the curing agent is adjusted to 23% by mass to the total amount of the curing liquid, and the mixture is dispersed for 30 minutes with a homomixer to prepare the curing liquid.

### Measurement of Viscosity

The curing liquid 1.1 mL is dispensed to a viscometer TVE-25L manufactured by Toki Sangyo Co., Ltd. with a micropipette to measure the viscosity of the curing liquid. As the measurement starts, the measured viscosity stabilizes. Thereafter, the measurement continues, and the measured viscosity after 5 minutes is taken as the viscosity of the curing liquid.

### Measurement of Surface Tension

The curing liquid 30 mL is dispensed into a petri dish, and the surface tension of the curing liquid is measured with a surface tensiometer DY-300 manufactured by Kyowa Interface Science Co., Ltd. The surface tension measured by the Wilhelmy method using a platinum plate is taken as the surface tension of the curing liquid.

### Sintering Process

In the sintering process according to the present embodiment, the green body formed by the three-dimensional fabrication apparatus 100 is heated in a degreasing-and-sintering furnace at a temperature equal to or higher than the pyrolysis temperature of the resin to degrease the resin component in the green body (i.e., a degreasing step). A sintering step, in which the green body is heated and held at a higher temperature, follows the above-described degreasing step to sinter the green body, thereby fabricating a three-dimensional object (sintered body) that is the green body solidified in single piece.

Specifically, in the degreasing step, a resin component made of an acrylic material is decomposed at a temperature higher than the pyrolysis temperature thereof and lower than the melting point or solidus temperature of the core particle, for example. Depending on the resin component, the multiple set temperatures at which the green body is heated and held may be provided. Alternatively, a degreasing method by solvent extraction is also applicable, in which the green body is immersed in a solvent instead of being heated to extract the resin from the green body.

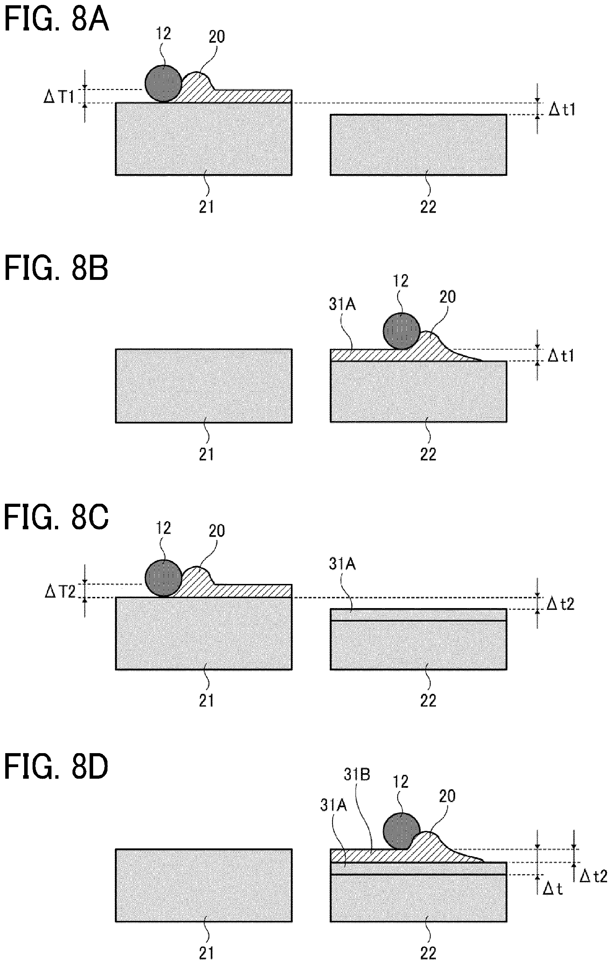

FIGS. 8A to 8D are schematic views illustrating an operation in the flattening step of the three-dimensional fabrication apparatus 100 according to the present embodiment. As illustrated in FIG. 8A, the controller 500 illustrated in FIG. 6 raises the supply stage 23 of the supply chamber 21 by a distance ΔT1, lowers the fabrication stage 24 of the fabrication chamber 22 by the distance Δt1. The distance ΔT1 is not necessarily the same as the distance Δt1 and may be greater than the distance Δt1. Similarly to the description with reference to FIG. 7B, the controller 500 moves and rotates the flattening roller 12 toward the fabrication chamber 22, which is an example of a first direction (moving direction). Thus, the powder 20 is transferred and supplied into the fabrication chamber 22.

Next, as illustrated in FIG. 8B, similarly to the description with reference to FIG. 7C, the controller 500 continues moving and rotating the flattening roller 12 to form a first powder layer 31A having a predetermined thickness Δt1 on the fabrication stage 24 of the fabrication chamber 22. That is, the controller 500 causes the flattening roller 12 to move in the first direction parallel to the fabrication stage 24 of the fabrication chamber 22 onto which the powder 20 is supplied to form the first powder layer 31A.

After forming the first powder layer 31A with the flattening roller 12, the controller 500 returns the flattening roller 12 to the initial position adjacent to the supply chamber 21.

Subsequently, as illustrated in FIG. 8C, the controller 500 raises the supply stage 23 of the supply chamber 21 by a distance ΔT2 and lowers the fabrication stage 24 of the fabrication chamber 22 by a distance Δt2. The distance ΔT2 is not necessarily the same as the distance Δt2 and may be greater than the distance Δt2. Similarly to the description with reference to FIG. 8A, the controller 500 moves and rotates the flattening roller 12 toward the fabrication chamber 22. Thus, the powder 20 is transferred and supplied onto the first powder layer 31A formed on the fabrication stage 24 of the fabrication chamber 22. Between the state illustrated in FIG. 8B and the state illustrated in FIG. 8C, the controller 500 causes the head 52 of the liquid discharge unit 50 not to discharge the fabrication liquid 10 to the first powder layer 31A.

Next, as illustrated in FIG. 8D, similarly to the description with reference to FIG. 8B, the controller 500 continues moving and rotating the flattening roller 12 to form a second powder layer 31B having a predetermined thickness Δt2 on the first powder layer 31A that has been formed in the fabrication chamber 22 and has not been solidified yet. That is, the controller 500 causes the flattening roller 12 to move in the first direction to form the first powder layer 31A. After forming the first powder layer 31A, the controller causes the flattening roller 12 to move in the first direction to form the second powder layer 31B on the first powder layer 31A.

Then, similarly to the description with reference to FIG. 7E, the controller 500 causes the head 52 of the liquid discharge unit 50 to discharge and apply droplets of the fabrication liquid 10 to the first powder layer 31A and the second powder layer 31B stacked on the first powder layer 31A that have not been solidified yet. Thus, the first powder layer 31A and the second powder layer 31B are cured (solidified) into the fabrication layer 30 having a predetermined thickness Δt. Here, the thickness Δt of the fabrication layer 30 = the thickness Δt1 of the first powder layer 31A + the thickness Δt2 of the second powder layer 31B. The thickness Δt1 of the first powder layer 31A may be different from or the same as the thickness Δt2 of the second powder layer 31B.

In other examples, the controller 500 may cause the head 52 of the liquid discharge unit 50 to discharge and apply droplets of the fabrication liquid 10 to three or more powder layers 31 that have not been solidified. Thus, the three or more powder layers 31 are cured (solidified) to form the fabrication layer 30 having the predetermined thickness Δt.

As described above, the controller 500 causes the flattening roller 12 to move and rotate in a direction in which a portion (bottom portion) of the flattening roller 12 facing (contacting) the powder 20 moves in the same direction as a direction in which the flattening roller 12 moves to form the powder layer 31 (i.e., the counter direction). Accordingly, the surface of the powder 20 can be uniformly flattened, but a cyclic uneven surface corresponding to the rotation cycle of the flattening roller 12 may be formed on the powder layer 31 depending on the component tolerance and the assembly tolerance of the flattening roller 12.

When an (N+1)-th powder layer 31 is formed on an N-th powder layer 31, the phases of the uneven surfaces may shifted from each other between the powder layers 31. For example, a protrusion of the N-th powder layer 31 and a recess of the (N+1)-th powder layer 31 overlap each other. In this case, the thickness of the (N+1)-th powder layer 31 varies from place to place in a plane whose normal direction is the thickness direction of the powder layer 31. Thus, the thickness of the powder layer 31 varies in each of the second to (N+1)-th powder layers 31.

When the thickness of the powder layer 31 varies, the fabrication liquid 10 may excessively or insufficiently permeate into the powder layer 31, thereby reducing the quality of the fabrication layer 30. Specifically, the fabrication liquid 10 may not sufficiently permeate into a thick portion of the powder layer 31, or the upper powder layer 31 may not be bonded to the lower powder layer 31 with the fabrication liquid 10, causing the insufficient adhesive strength between the powder layers 31. As a result, the strength of the fabrication layer 30 may be insufficient. On the other hand, the fabrication liquid 10 may excessively permeate into a thin portion of the powder layer 31 in a lateral direction perpendicular to the thickness direction of the powder layer 31. As a result, the fabrication layer 30 may become larger than intended at an end in the lateral direction perpendicular to the thickness direction of the powder layer 31.

In view of the above, an object of the present embodiment is to form the (N+1)-th powder layer 31 having the uniform thickness even when the N-th powder layer 31 has the cyclic uneven surface, thereby preventing the fabrication liquid from excessively and insufficiently permeating into the powder layer 31, which is caused by variation of thickness of the powder layer 31, to obtain a high-quality fabrication layer 30.

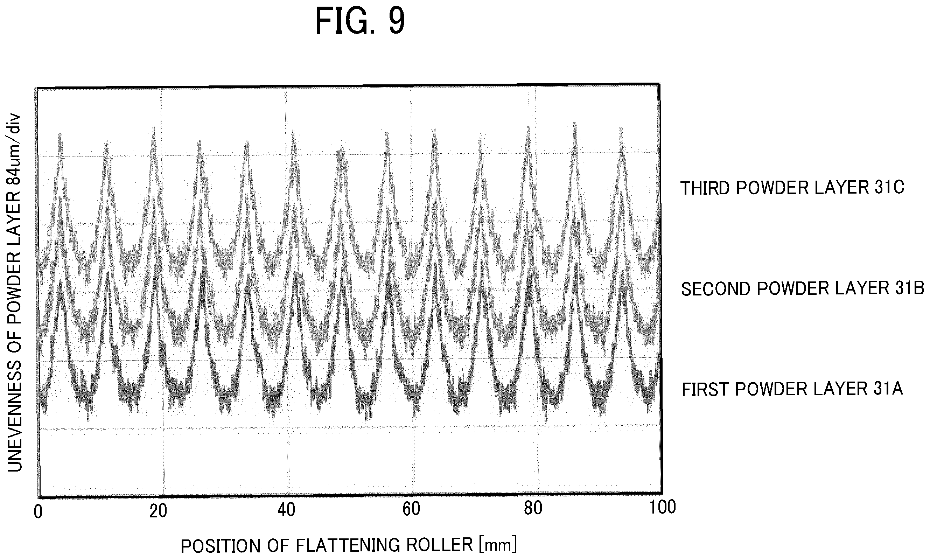

FIG. 9 is a graph illustrating an uneven surface of the powder layer 31 according to the present embodiment. As illustrated in FIG. 9, although the first powder layer 31A has a cyclic uneven surface, the second powder layer 31B has a cyclic uneven surface that is in phase with the cyclic uneven surface of the first powder layer 31A. Further, a third powder layer 31C has a cyclic uneven surface that is in phase with the cyclic uneven surface of the second powder layer 31B. As described above, when the uneven surfaces of the first to third powder layers 31A to 31C are in phase with each other, the thicknesses of the second and third powder layers 31B and 31C are constant at any position of the flattening roller 12 (recoater) in the moving direction.

Accordingly, since the thickness of the powder layer 31 does not vary, the fabrication liquid 10 is prevented from excessively and insufficiently permeating into the powder layer 31. As a result, the quality of the fabrication layer 30 does not deteriorate. Specifically, the fabrication liquid 10 sufficiently permeates into the powder layer 31 without a thick portion, and the upper powder layer 31 is reliably bonded to the lower powder layer 31 with the fabrication liquid 10, thereby preventing the insufficient adhesive strength between the powder layers 31. As a result, the fabrication layer 30 has the sufficient strength. In addition, the fabrication liquid 10 does not excessively permeate into the powder layer 31 without a thin portion in the lateral direction perpendicular to the thickness direction of the powder layer 31. As a result, the fabrication layer 30 does not become larger than intended at the end in the lateral direction perpendicular to the thickness direction of the powder layer 31.

In order to obtain the powder layers 31 as illustrated in FIG. 9, the controller 500 illustrated in FIG. 6 causes the flattening roller 12 to form the first powder layer 31A having the cyclic uneven surface and form, on the first powder layer 31A, the second powder layer 31B having the same uneven surface that is in phase with the cyclic uneven surface of the first powder layer 31.

Accordingly, the second powder layer 31B has the uniform thickness even when the first powder layer 31A has the cyclic uneven surface, thereby preventing the fabrication liquid from excessively and insufficiently permeating into the powder layer 31, which is caused by variation of thickness of the powder layer 31, to obtain a high-quality fabrication layer 30.

The controller 500 preferably causes the flattening roller 12 to form a lower powder layer 31 having the cyclic uneven surface and form, on the lower powder layer 31, an upper powder layer 31 having the same uneven surface that is in phase with the cyclic uneven surface of the lower powder layer 31 for all powder layers 31. Thus, the thickness of each of all the powder layers 31 can be made uniform.

Further, as described with reference to FIGS. 8A to 8D, after forming the first powder layer 31, the controller 500 causes the flattening roller 12 to form the second powder layer 31B on the first powder layer 31A that has not been solidified and causes the head 52 to apply the fabrication liquid 10 to multiple powder layers 31 including at least the first powder layer 31A and the second powder layer 31B that have not been solidified to solidify the multiple powder layers 31 to form the fabrication layer 30.

As a result, the fabrication liquid 10 is mixed with the powder 20 of the first powder layer 31A and the second powder layer 31B between the uneven surfaces thereof, and the uneven surface of the first powder layer 31A and the uneven surface of the second powder layer 31B are firmly bonded to form an integrated layer, thereby improving the adhesive strength between the powder layers 31. Accordingly, the strength of the fabrication layer 30 is improved.

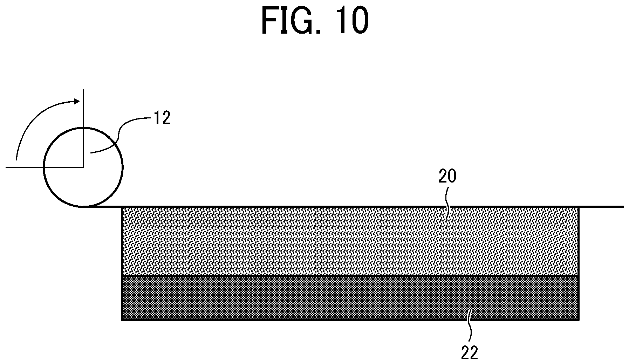

FIG. 10 is a schematic view of the fabrication section 1 for explaining a phase of rotation of the flattening roller 12 according to the present embodiment. As described with reference to FIGS. 8A to 8D, the controller 500 causes the flattening roller 12 to move in the first direction parallel to the fabrication stage 24 of the fabrication chamber 22 onto which the powder 20 is supplied to form the first powder layer 31A. Further, the controller 500 causes the flattening roller 12 to rotate at an initial position before moving the flattening roller 12 so as to set the phase of rotation of the flattening roller 12 to a predetermined reference phase.

That is, the controller 500 causes the flattening roller 12 to start moving with a phase of rotation of the flattening roller 12 in the first direction to form the first powder layer 31A, and causes the flattening roller 12 to start moving in the first direction with the same phase of rotation to form the second powder layer 31B. As a result, the uneven surface of the first powder layer 31A is in phase with the uneven surface of the second powder layer 31B, which are formed by moving the flattening roller 12 in the first direction, thereby forming the second powder layer 31B having the uniform thickness.

Further, the controller 500 causes the flattening roller 12 to rotate at a rotation speed while moving, to form the first powder layer 31A, and causes the flattening roller 12 to rotate at the same rotation speed while moving, to form the second powder layer 31B. As a result, the uneven surface of the first powder layer 31A is in phase with the uneven surface of the second powder layer 31B, thereby forming the second powder layer 31B having the uniform thickness.

Further, the controller 500 causes the flattening roller 12 to move at a moving speed while rotating, to form the first powder layer 31A, and causes the flattening roller 12 to move at the same moving speed while rotating, to form the second powder layer 31B. As a result, the uneven surface of the first powder layer 31A is in phase with the uneven surface of the second powder layer 31B, thereby forming the second powder layer 31B having the uniform thickness.

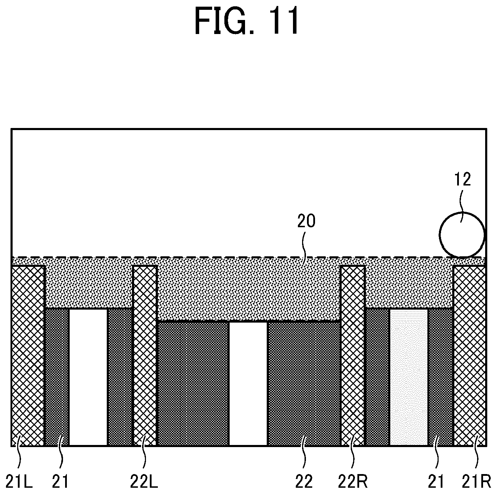

FIG. 11 is a schematic view of the fabrication section 1 according to a variation of the present embodiment. FIG. 11 illustrates the fabrication section 1 that includes the fabrication chamber 22 and the two supply chambers 21 disposed adjacent to both the left and right sides of the fabrication chamber 22. In FIG. 11, a left frame 21L is located at the left end of the left supply chamber 21, a left frame 22L is located at the left end of the fabrication chamber 22, a right frame 22R is located at the right end of the fabrication chamber 22, and a right frame 21R is located at the right end of the right supply chamber 21.

In the variation illustrated in FIG. 11, the controller 500 causes the flattening roller 12 to move in the first direction (moving direction) parallel to the surface of the fabrication stage 24 of the fabrication chamber 22 onto which the powder 20 is supplied to form the first powder layer 31A, and causes the flattening roller 12 to move in a second direction opposite to the first direction to form the second powder layer 31B.

Specifically, the controller 500 causes the flattening roller 12 to move in the first direction parallel to the surface of the fabrication stage 24 of the fabrication chamber 22 onto which the powder 20 is supplied to form the first powder layer 31A having the cyclic uneven surface, and adjusts the phase of rotation of the flattening roller 12 to start moving in the second direction opposite to the first direction to form the second powder layer 31B having the same uneven surface that is in phase with the cyclic uneven surface of the first powder layer 31.

More specifically, the controller 500 causes the flattening roller 12 to rotate above the left frame 21L, which is the initial position before moving the flattening roller 12 in the first direction, so as to set the phase of rotation of the flattening roller 12 to a first reference phase. The controller 500 causes the flattening roller 12 to rotate above the right frame 21R, which is an initial position before moving the flattening roller 12 in the second direction, so as to set the phase of rotation of the flattening roller 12 to a second reference phase.

As a result, the uneven surface of the first powder layer 31A is in phase with the uneven surface of the second powder layer 31B, thereby forming the second powder layer 31B having the uniform thickness. Here, the first powder layer 31A is formed by moving the flattening roller 12 in the first direction, and the second powder layer 31B is formed by moving the flattening roller 12 in the second direction. Note that the rotation of the flattening roller 12 above the right frame 21R may be omitted if the phase of rotation of the flattening roller 12 can be set to the second reference phase above the right frame 21R.

When the first powder layer 31A is formed by moving the flattening roller 12 in the first direction and the second powder layer 31B is formed by moving the flattening roller 12 in the second direction as described in the variation illustrated in FIG. 11, it may be difficult to completely match the conditions for moving the flattening roller 12 in the first direction and the conditions for moving the flattening roller 12 in the second direction.

Therefore, in all the powder layers 31 including the first powder layer 31A and the second powder layer 31B, the controller 500 causes the flattening roller 12 to start moving with a phase of rotation, rotate at a rotation speed, and move at a moving speed while keeping a variation of the phase of rotation and a variation of a ratio of the moving speed to the rotation speed within 10% to form the powder layer 31. As a result, the shift of the phase of the uneven surface of all the powder layers 31 is reduced, thereby forming each of all the powder layers 31 having an approximately uniform thickness.

Specific examples according to the present embodiment, the variation thereof, and the comparative example are described below. Common conditions in Examples 1 to 5 and Comparative Example 1 are as follows. The diameter of the flattening roller 12 was 20 mm, and the runout of the flattening roller 12 was 20 µm at the center. The thickness of the powder layer 31 was 100 µm. The fabrication layers 30 were laminated at the center of the fabrication chamber 22 to fabricate a cube having dimensions 10× 10× 10 mm. The cube was taken out from the fabrication chamber 22, and solidified by vacuum drying at 140°C for 4 hours. Thereafter, dimensions of the cube were measured. Table 1 illustrates the results of measuring the widths of the cube in the directions X, Y, and Z as the average dimension of the three-dimensional fabrication object.

### Example 1

The three-dimensional fabrication apparatus 100 illustrated in FIGS. 7A to 7E fabricated a cube. Regarding the phase of rotation of the flattening roller 12, a circumferential position of the flattening roller 12 was set to 0 degrees at the initial position to form the first powder layer 31A and all of other powder layers 31. The other conditions are illustrated in Table 1.

### Example 2

The three-dimensional fabrication apparatus 100 illustrated in FIGS. 11 fabricated a cube. The other conditions were the same as those in Example 1.

### Example 3

The three-dimensional fabrication apparatus 100 illustrated in FIGS. 7A to 7E fabricated a cube. Conditions other than the rotation direction of the flattening roller 12, which is a forward direction opposite to the counter direction, were the same as those in Example 1. A larger amount of surplus powder was generated than in the other examples.

### Example 4

The three-dimensional fabrication apparatus 100 illustrated in FIGS. 7A to 7E fabricated a cube. Conditions other than the rotation speed and the moving speed of the flattening roller 12 were the same as those in Example 1.

### Example 5

The three-dimensional fabrication apparatus 100 illustrated in FIGS. 7A to 7E fabricated a cube. The conditions illustrated in Table 1 were the same as those in Example 1. In Example 5, applying of the fabrication liquid 10, and heating and vacuum drying were repeated for each powder layer 31, which is different from the other examples. As a result, the total operation time until completion was about 500 hours. In the other examples, the operation time was about 15 hours.

### Comparative Example 1

The three-dimensional fabrication apparatus 100 illustrated in FIGS. 7A to 7E fabricated a cube. Regarding the phase of rotation of the flattening roller 12, the circumferential position of the flattening roller 12 was set to 0 degrees at the initial position to form the first powder layer 31, but the circumferential position of the flattening roller 12 at the initial position was not controlled to form the other powder layers 31 after the first powder layer 31. The other conditions were the same as those in Example 1. The circumferential positions of the flattening roller 12 at the initial position were measured for all the powder layers 31, and each circumferential position after the first powder layer 31A was shifted from the previous circumferential position by about +90 degrees.

**Table 1**

| | AVARAGE DIMENSION OF FABRICATION OBJECT [mm] | ROLLER PHASE BEFORE RECOATING | ROTATION DIRECTION OF ROLLER | ROTATION SPEED OF ROLLER [rpm] | MOVING SPEED OF ROLLER [mm/s] |
|---|---|---|---|---|---|
| EXAMPLE 1 | 10.1 | 0 DEGREES | COUNTER | 300 | 100 |
| EXAMPLE 2 | 9.9 | 0 DEGREES | COUNTER | 300 | 100 |
| EXAMPLE 3 | 10.4 | 0 DEGREES | FORWARD | 300 | 100 |
| EXAMPLE 4 | 10.3 | 0 DEGREES | COUNTER | 150 | 50 |
| EXAMPLE 5 | 10.5 | 0 DEGREES | COUNTER | 300 | 100 |
| COMPARATIVE EXAMPLE 1 | 13.5 | NO CONTROL | COUNTER | 300 | 100 |

As described above, the three-dimensional fabrication apparatus 100 as a fabrication apparatus according to an embodiment of the present disclosure includes the fabrication chamber 22 as a loading unit including the fabrication stage 24 as a stage onto which powder 20 is supplied, the flattening roller 12 as a rotator that flattens the powder 20 on the fabrication stage 24 to form a powder layer 31 including a first powder layer 31A and a second powder layer 31B, the head 52 as a solidification device that applies a fabrication liquid 10 to the powder layer 31 to solidify the powder layer 31 to form a fabrication layer 30, and the controller 500 as circuitry. The controller 500 causes the flattening roller 12 to move and rotate to form the first powder layer 31A having a cyclic uneven surface and form the second powder layer 31B on the first powder layer 31A. The second powder layer has an uneven surface that is in phase with the cyclic uneven surface.

Accordingly, the second powder layer 31B has the uniform thickness even when the first powder layer 31A has the cyclic uneven surface, thereby preventing the fabrication liquid 10 from excessively and insufficiently permeating into the powder layer 31, which is caused by variation of thickness of the powder layer 31, to obtain a high-quality fabrication layer 30.

The controller 500 preferably causes the flattening roller 12 to form a lower powder layer 31 having the cyclic uneven surface and form, on the lower powder layer 31, an upper powder layer 31 having the same uneven surface that is in phase with the cyclic uneven surface of the lower powder layer 31 for all the powder layers 31. Thus, the thickness of each of all the powder layers 31 can be made uniform.

The controller 500 causes the flattening roller 12 to move in the first direction parallel to the surface of the fabrication stage 24 onto which the powder 20 is supplied, to form the powder layer 31. Further, the controller 500 causes the flattening roller 12 to start moving with a phase of rotation of the flattening roller 12 in the first direction to form the first powder layer 31A, and causes the flattening roller 12 to start moving in the first direction with the same phase of rotation to form the second powder layer 31B.

As a result, the uneven surface of the first powder layer 31A is in phase with the uneven surface of the second powder layer 31B, which are formed by moving the flattening roller 12 in the first direction, thereby forming the second powder layer 31B having the uniform thickness.

The controller 500 causes the flattening roller 12 to move in the first direction parallel to the surface of the fabrication stage 24 of the fabrication chamber 22 onto which the powder 20 is supplied to form the first powder layer 31A having the cyclic uneven surface, and adjusts the phase of rotation of the flattening roller 12 to start moving in the second direction opposite to the first direction to form the second powder layer 31B having the same uneven surface that is in phase with the cyclic uneven surface of the first powder layer 31.

As a result, the uneven surface of the first powder layer 31A is in phase with the uneven surface of the second powder layer 31B, thereby forming the second powder layer 31B having the uniform thickness. Here, the first powder layer 31A is formed by moving the flattening roller 12 in the first direction, and the second powder layer 31B is formed by moving the flattening roller 12 in the second direction.

The controller 500 causes the flattening roller 12 to move and rotate in a direction in which the portion of the flattening roller 12 facing the powder 20 moves in the same direction as the direction in which the flattening roller 12 moves to form the powder layer 31. Thus, the surface of the powder 20 can be uniformly flattened.

The controller 500 causes the flattening roller 12 to rotate at a rotation speed while moving, to form the first powder layer 31A, and causes the flattening roller 12 to rotate at the same rotation speed while moving, to form the second powder layer 31B.

As a result, the uneven surface of the first powder layer 31A is in phase with the uneven surface of the second powder layer 31B, thereby forming the second powder layer 31B having the uniform thickness.

The controller 500 causes the flattening roller 12 to move at a moving speed while rotating, to form the first powder layer 31A, and causes the flattening roller 12 to move at the same moving speed while rotating, to form the second powder layer 31B.

As a result, the uneven surface of the first powder layer 31A is in phase with the uneven surface of the second powder layer 31B, thereby forming the second powder layer 31B having the uniform thickness.

After forming the first powder layer 31A, the controller 500 causes the flattening roller 12 to form the second powder layer 31B on the first powder layer 31A that has not been solidified and causes the head 52 to apply the fabrication liquid 10 to multiple powder layers 31 including at least the first powder layer 31A and the second powder layer 31B that have not been solidified to solidify the multiple powder layers 31 to form the fabrication layer 30.

As a result, the fabrication liquid 10 is mixed with the powder 20 of the first powder layer 31A and the second powder layer 31B between the uneven surfaces thereof, and the uneven surface of the first powder layer 31A and the uneven surface of the second powder layer 31B are firmly bonded to form an integrated layer, thereby improving the adhesive strength between the powder layers 31. Accordingly, the strength of the fabrication layer 30 is improved.

In all the powder layers 31 including the first powder layer 31A and the second powder layer 31B, the controller 500 causes the flattening roller 12 to start moving with a phase of rotation, rotate at a rotation speed, and move at a moving speed while keeping a variation of the phase of rotation and a variation of a ratio of the moving speed to the rotation speed within 10% to form the powder layer 31.

As a result, the shift of the phase of the uneven surface of all the powder layers 31 is reduced, thereby forming each of all the powder layers 31 having an approximately uniform thickness.

A fabrication method according to an embodiment of the present disclosure includes supplying powder 20 onto the fabrication stage 24 of the fabrication chamber 22, rotating and moving the flattening roller 12 to flatten the powder 20 on the fabrication stage 24 to form a powder layer 31 including a first powder layer 31A and a second powder layer 31B, applying the fabrication liquid 10 to the powder layer 31 on the fabrication stage 24 to solidify the powder layer 31 to form a fabrication layer 30, forming the first powder layer 31A having a cyclic uneven surface; and forming the second powder layer 31B on the first powder layer 31A. The second powder layer 31B has an uneven surface that is in phase with the cyclic uneven surface.

A non-transitory recording medium stores program codes which, when executed by one or more processors, cause the one or more processors to perform a fabrication method according to an embodiment of the present disclosure. The method includes supplying powder 20 onto the fabrication stage 24 of the fabrication chamber 22, rotating and moving the flattening roller 12 to flatten the powder 20 on the fabrication stage 24 to form a powder layer 31 including a first powder layer 31A and a second powder layer 31B, applying the fabrication liquid 10 to the powder layer 31 on the fabrication stage 24 to solidify the powder layer 31 to form a fabrication layer 30, forming the first powder layer 31A having a cyclic uneven surface; and forming the second powder layer 31B on the first powder layer 31A. The second powder layer 31B has an uneven surface that is in phase with the cyclic uneven surface.

Any one of the above-described operations may be performed in various other ways, for example, in an order different from the one described above.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

## Claims

1. A fabrication apparatus (100) comprising:
a loading unit (22) including a stage (24) onto which powder (20) is supplied;
a rotator (12) configured to rotate while moving to flatten the powder (20) on the stage (24) to form a powder layer (31) including a first powder layer (31A) and a second powder layer (31B);
a solidification device (52) configured to apply a fabrication liquid (10) to the powder layer (31) on the stage (24) to solidify the powder layer (31) to form a fabrication layer (30); and
circuitry (500) configured to cause the rotator (12) to move and rotate to:
form the first powder layer (31A) having a cyclic uneven surface; and
form the second powder layer (31B) on the first powder layer (31A), the second powder layer (31B) having an uneven surface that is in phase with the cyclic uneven surface.

2. The fabrication apparatus (100) according to claim 1,
wherein the circuitry (500) is further configured to cause the rotator (12) to:
start moving in a moving direction parallel to a surface of the stage (24) with a phase of rotation of the rotator (12) to form the first powder layer (31A); and
start moving in the moving direction with the phase to form the second powder layer (31B).

3. The fabrication apparatus (100) according to claim 1,
wherein the circuitry (500) is further configured to:
cause the rotator (12) to move in a moving direction parallel to a surface of the stage (24) to form the first powder layer (31A) having the cyclic uneven surface; and
adjust a phase of rotation of the rotator (12) to cause the rotator (12) to start moving in a direction opposite to the moving direction to form the second powder layer (31B) having the uneven surface that is in phase with the cyclic uneven surface.

4. The fabrication apparatus (100) according to any one of claims 1 to 3,
wherein the circuitry (500) is further configured to cause the rotator (12) to move and rotate in a direction in which a portion of the rotator (12) facing the powder (20) moves in the same direction as a direction in which the rotator (12) moves to form the powder layer (31).

5. The fabrication apparatus (100) according to any one of claims 1 to 4, wherein the circuitry (500) is further configured to cause the rotator (12) to:
rotate at a rotation speed while moving, to form the first powder layer (31A); and
rotate at the rotation speed while moving, to form the second powder layer (31B).

6. The fabrication apparatus (100) according to any one of claims 1 to 5, wherein the circuitry (500) is further configured to cause the rotator (12) to:
move at a moving speed while rotating, to form the first powder layer (31A); and
move at the moving speed while rotating, to form the second powder layer (31B).

7. The fabrication apparatus (100) according to any one of claims 1 to 6, wherein the circuitry (500) is further configured to:
cause the rotator (12) to form the second powder layer (31B) on the first powder layer (31A) that has not been solidified, and
causes the solidification device (52) to apply the fabrication liquid (10) to multiple powder layers (31) including at least the first powder layer (31A) and the second powder layer (31B) that have not been solidified to solidify the multiple powder layers (31) to form the fabrication layer (30).

8. The fabrication apparatus (100) according to any one of claims 1 to 7,
wherein the circuitry (500) is further configured to cause the rotator (12) to start moving with a phase of rotation, rotate at a rotation speed, and move at a moving speed while keeping a variation of the phase of rotation and a variation of a ratio of the moving speed to the rotation speed within 10% to form all powder layers (31) including the first powder layer (31A) and the second powder layer (31B).

9. A fabrication method comprising:
supplying powder (20) onto a stage (24) of a loading unit (22);
rotating and moving a rotator (12) to flatten the powder (20) on the stage (24) to form a powder layer (31) including a first powder layer (31A) and a second powder layer (31B), the rotating and moving including:
forming the first powder layer (31A) having a cyclic uneven surface; and
forming the second powder layer (31B) on the first powder layer (31A), the second powder layer (31B) having an uneven surface that is in phase with the cyclic uneven surface; and
applying a fabrication liquid (10) to the powder layer (31) on the stage (24) to solidify the powder layer (31) to form a fabrication layer (30).

10. A carrier medium carrying computer readable code for controlling a computer system to carry out a method, the method comprising:
supplying powder (20) onto a stage (24) of a loading unit (22);
rotating and moving a rotator (12) to flatten the powder (20) on the stage (24) to form a powder layer (31) including a first powder layer (31A) and a second powder layer (31B), the rotating and moving including:
forming the first powder layer (31A) having a cyclic uneven surface; and
forming the second powder layer (31B) on the first powder layer (31A), the second powder layer (31B) having an uneven surface that is in phase with the cyclic uneven surface; and
applying a fabrication liquid (10) to the powder layer (31) on the stage (24) to solidify the powder layer (31) to form a fabrication layer (30).
